(19) Europäisches Patentamt / European Patent Office / Office européen des brevets

(11) **EP 1 926 270 A1**

(12) **EUROPEAN PATENT APPLICATION**

(43) Date of publication:
**28.05.2008 Bulletin 2008/22**

(51) Int Cl.:
***H04L 27/26*** *(2006.01)*

(21) Application number: **06301184.5**

(22) Date of filing: **27.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Koninklijke Philips Electronics N.V.**
**5621 BA Eindhoven (NL)**

(72) Inventors:
- **Linnartz, Johan**
  **Philips IP&S - NL**
  **Eindhoven 5656 AA (NL)**
- **Rietman, Ronald**
  **Philips IP&S - NL**
  **Eindhoven 5656 AA (NL)**

(74) Representative: **Roche, Denis**
**Société Civile SPID,**
**156, Boulevard Haussmann**
**75008 Paris (FR)**

(54) **Receiver for receiving a clipped multicarrier signal**

(57) Orthogonal frequency division multiplexing (OFDM) modulation has a number of distinct advantages for transmission over multipath channels. But, practical systems require a margin of about 8 to 9 dB headroom between the average signal power and the clipping level of the transmitter and the receiver. The receiver (3) of the transmission system (1) receives OFDM encoded digital signals, wherein clipping by the analog-to-digital converter (4) of the receiver (3) is tolerated. The receiver (3) therefor employs a clip restoration unit (6) which estimates an amount of clipping of the filtered digital signals. Further, the clip restoration unit (6) restores the filtered digital signals with respect to the amount of clipping estimated.

FIG. 1

EP 1 926 270 A1

**Description**

FIELD OF THE INVENTION

The present invention relates to a receiver for receiving encoded digital signals, wherein the digital signals are transmitted as symbols spread over multiple dimensions. More particularly, the present invention relates to a receiver for receiving a signal modulated according to a technique such as multi-carrier modulation or orthogonal frequency division multiplexing (OFDM), wherein symbols are modulated onto the subcarriers according to a modulation scheme such as quadrature amplitude modulation (QAM), especially 16-QAM or 64-QAM.

BACKGROUND OF THE INVENTION

WO 02/067525 A2 describes a transmission system for transmitting a multicarrier signal from a transmitter to a receiver. The multicarrier signal comprises a plurality of subcarriers. A multicarrier signal modulation method such as OFDM may be used.

SUMMARY OF THE INVENTION

It is an object of the invention to provide a receiver apparatus to receive encoded digital signals with an improved decoding performance. A further object of the invention is to provide a method to receive encoded digital signals, especially to receive OFDM encoded digital signals.

These objects are solved by a receiver as defined in claim 1, by a mobile device as defined in claim 17, by a telecommunication system as defined in claim 18, and by a method as defined in claim 19, respectively. Advantageous developments of the invention are mentioned in the dependent claims.

It is advantageous that a digital filter for filtering the encoded digital signal is provided, wherein the digital filter filters the encoded digital signal according to a discrete Fourier transformation. But, the digital filter may use also another transformation scheme. And, OFDM is considered as an example, but other multi-carrier or multi-tone systems, even if these are not based on a FFT, or Walsh-Hadamard spreading, or a combination of these can be used.

It is advantageous that the clip restoration unit estimates the amount of clipping for a clipped sample of the digital signal on the basis of an inner product of a component-wise product of a filtered vector which vector is selecting the clipped sample and which is filtered according to a fast Fourier transformation by the digital filter, and a vector selecting the empty subcarriers of the reference subset, and an output vector of the digital filter, which is the filtered digital signal. Thereby, the digital filter retrieves the filtered vector selecting the clipped sample of the digital signal from a look-up table. It is further advantageous that the clip restoration unit determines a compensated output vector as a vector-sum of the output vector of the digital filter and the filtered vectors of the vectors selecting the clipped samples, wherein each of the filtered vectors of the vectors selecting the clipped samples is weighted by the amount of clipping estimated for the clipped samples, respectively.

It is advantageous that the clip restoration unit estimates the amount of clipping of the sample of the received signal from a deviation of the actual value of the sample of the reference subset from the specific value of the sample of the reference subset. This has the advantage that samples having values which are known to the receiver can be used as samples of the reference subset.

It is advantageous that the specific value of the sample of the reference subset is preset to zero. It is further advantageous that symbols of the reference subset are empty symbols. Thereby, the computational burden at the receiver can be reduced.

It is advantageous that the clip restoration unit estimates the amount of clipping of the received digital signal from the actual values of the symbols of the reference subset.

It is advantageous that the clip restoration unit treats a clipping analog-to-digital converter of the receiver as a linear operator acting on the filtered digital signals. Therewith, front end imperfections can be taken into account.

It is advantageous that the clip restoration unit estimates the linear operator when clipping does not occur and/or when clipping can be ignored.

It is advantageous that the clip restoration unit calculates most likely encoded digital signals on the basis of the received digital signals according to a maximum likelihood calculation. It is further advantageous that the clip restoration unit performs the maximum likelihood calculation with respect to a probability density function of the encoded digital signals and a probability density function of a noise added to the encoded digital signals.

It is advantageous that the clip restoration unit selects the probability density function of the encoded digital signals and the probability density function of the noise on the basis of at least a signal-to-noise ratio. The receiver can know certain parameters such as the signal-to-noise ratio and maybe also the interference from neighbouring channels for each subcarrier. The receiver may not determine the full probability density functions, but may determine the actual values of one or more parameters and select the appropriate probability density function on the basis of these parameters.

It is advantageous that the clip restoration unit calculates mean estimate encoded digital signals on the basis of the received digital signals according to a minimum mean square error estimate calculation.

In an OFDM system, the subcarriers of a multicarrier signal are arranged orthogonal to each other so that the subcarriers can be separated from each other at the receiver apparatus. Further, the subcarriers do overlap, and in usual OFDM systems they overlap quite significantly. OFDM modulation has a number of distinct advantages for transmission over multipath channels. However, the nearly Gaussian distribution of the OFDM transmit signal may be a disadvantage. Practical systems therefor may require a margin of about 8 to 9 dB headroom between the average signal power and the clipping level of the transmitter and the receiver.

In telecommunication systems arranged as OFDM broadcasting systems or such the receiver may be a part of a mobile device, especially a mobile phone, which is limited in available power. Further for wireless local area networks (WLAN) systems which transmit a Gibibit per second or more over a short distance, the power consumption of the analog-to-digital converter in the receiver may exceed the power consumed by the transmit power amplifier.

An advantage of the invention is that clipping signals in the analog-to-digital converter of the receiver can be enhanced and may be at least partitially restored.

As an advantage the design specifications of the receiver, especially the analog-to-digital converter, can be relaxed. And, the average power relative to the clipping threshold can be boosted, for example, by 2 to 3 dB, so for a specified signal-to-quantization noise, the number of quantization steps may be reduced. Hence, the power consumption, especially the power consumption by the analog-to-digital converter, may be reduced. Additional digital signal processing operations required to perform the method of the invention may need some additional power, but this power consumption is more than compensated, because typical digital signal processing operations require orders of magnitude less power than analog operations.

It is advantageous that the digital filter filters the encoded digital signals according to a discrete Fourier transformation, especially a fast Fourier transformation.

It is advantageous that the clip restoration unit estimates the amount of clipping of the filtered digital signals from a deviation of the actual values of the subcarriers of the reference subset from the specific values of the subcarriers of the reference subset. This has the advantage that the reference subset may be defined by subcarriers for which the receiver knows the specific values. These specific values may be preset in the receiver. Further, the subcarriers of the reference subset may be located at the edges of the spectrum.

It is advantageous that the subcarriers of the reference subset are empty subcarriers. This is a special case in which the specific values are set to vanishing values. Any deviation then equals the actual value of the subcarrier. Hence, the computational burden is reduced. But, the specific values of the subcarriers of the reference subset may also be set with reference to a predetermined pattern or in another way.

It is advantageous that the clip restoration unit estimates the amount of clipping for a clipped sample of the digital signal on the basis of an inner product of a component-wise product of a filtered vector which vector is selecting the clipped sample and which is filtered according to a fast Fourier transformation by the digital filter, and a vector selecting the empty subcarriers of the reference subset, and an output vector of the digital filter, which is the filtered digital signal, divided by a number of the empty subcarriers selected. Thereby it is advantageous that the digital filter retrieves the filtered vector selecting the clipped sample of the digital signal from a look-up table. This has the advantage that the computational burden for the calculation of the amount of clipping is reduced. Further, retrieving of the filtered vector selecting the clipped sample of the digital signal from the look-up table has the advantage, that a part of the calculation of the amount of clipping can be substituted by an access to a precalculated table, wherein the size of the precalculated table is relatively small, because the effective number of filtered vectors selecting the clipped sample of the digital signal consisting of a value of one at the position of the clipped sample and zeros at all other positions is relatively small.

It is advantageous that the clip restoration unit determines a compensated output vector as a vector-sum of the output vector of the digital filter and the filtered vectors of the vectors selecting the clipped samples, wherein each of the filtered vectors of the vectors selecting the clipped samples is weighted by the amount of clipping estimated for the clipped samples, respectively. This has the advantage that the values of the clipped samples are at least partitially compensated. The samples including the compensated samples can then be used to equalize and detect the data of the enhanced filtered digital signals.

It is advantageous that the clip restoration unit models front end imperfections of the receiver as a linear operator acting on the filtered digital signals. It is further advantageous that the clip restoration unit estimates the linear operator when clipping does not occur and/or when clipping can be ignored. This has the advantage that the performance of clip restoration is further increased.

It is advantageous that the clip restoration unit calculates most likely encoded digital signals on the basis of the filtered digital signals according to a maximum likelihood calculation. It is further advantageous that the clip restoration unit performs the maximum likelihood calculation with respect to probability density functions of the encoded digital signals and a noise added to the encoded digital signals. These probability density functions may be determined from a signal-to-noise ratio, especially from the signal-to-noise ratio during the preamble of a packet.

It is advantageous that the clip restoration unit calculates mean estimate encoded digital signals on the basis of the filtered digital signals according to a minimum mean square error estimate calculation. Such an estimate can also minimize the mean square input error, which is the mean of square of the input space norm of the difference between the input and its estimate, given the output. This has the advantage that the performance of clip restoration is further increased. A further advantage is that the power of the signal may be increased so that the signal-to-noise ratio is increased. Thereby, power optimization of the signal may include clipping of a significant part of the samples. The clipped samples can then be restored by the clip restoration method.

These and other aspects of the invention will be apparent from and elucidated with reference to the embodiments described hereinafter.

BRIEF DESCRIPTION OF THE DRAWINGS

The present invention will become readily understood from the following description of preferred embodiments thereof made with reference to the accompanying formulas and the accompanying drawings, in which like parts are designated by like reference signs and in which:

Fig. 1 shows a block diagram of a transmission system comprising a receiver according to an embodiment of the present invention;

Fig. 2 shows an orthogonal frequency division multiplexing symbol allocation diagram for illustrating the embodiment of the present invention;

Fig. 3 shows time samples of an orthogonal frequency division multiplexing signal clipped at two samples to illustrate the present invention; and

Fig. 4 shows subcarrier contents of an orthogonal frequency division multiplexing signal and artifacts due to clipping on subcarriers of a reference subset to illustrate the embodiment of the present invention.

DETAILED DESCRIPTION OF THE EMBODIMENT

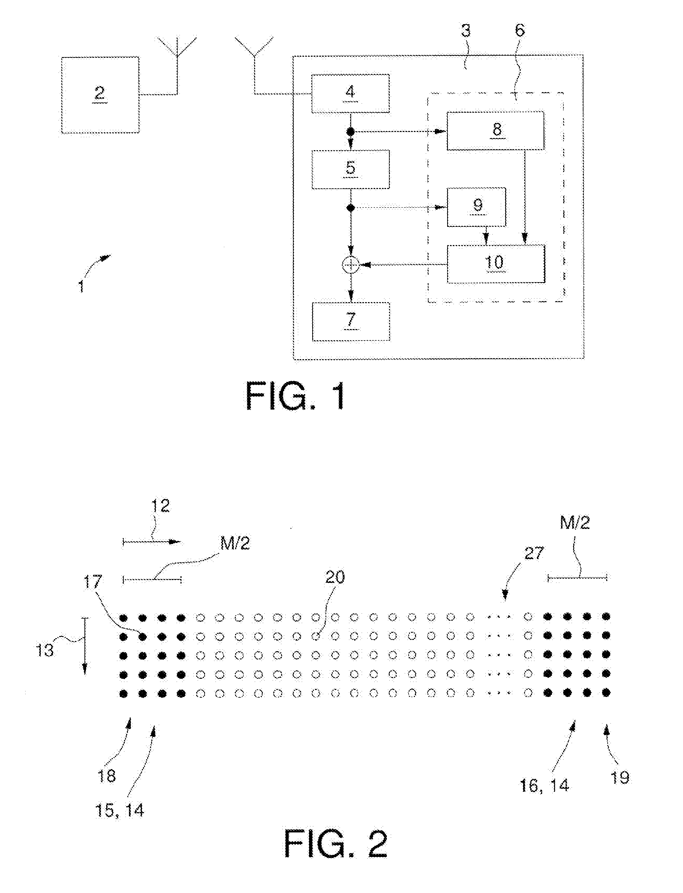

Fig. 1 shows a block diagram of a transmission system 1 according to an embodiment of the present invention. The transmission system 1 comprises a transmitter 2 and a receiver 3.

The transmission system 1 can use a compensation technique for the class of modulation methods in which multiple symbols are spread over multiple dimensions, such that the clipping of one receive sample has an impact on multiple, perhaps (and preferably) many but not necessarily all) dimensions. Preferably some dimensions are not used by the transmission scheme. OFDM is an example, as well as other multi-carrier or multi-tone systems, even if these are not based on an FFT but for instance on a DFT, or Walsh-Hadamard spreading, or a combination of these. In such cases the filter bank differs from an FFT. Multi-Carrier CDMA is a furhter example. The method of the invention applies equally well to transmission systems 1 with multiple receive antennas (multiple-input-multiple-output, that is MIMO or SIMO) even if spatial multiplexing is used. The method of the invention can also be used for modulation based on wavelets. And, the method of the invention can be used not only for radio communication, but also for cable transmission receivers 3, or the reception of modulated light signals.

The transmission system 1 of the embodiment is arranged for transmission of multicarrier signals, especially for multi-carrier modulation or orthogonal frequency division multiplexing using a QAM bit mapping scheme, especially 16-QAM or 64-QAM. The transmission system 1 may be arranged as an orthogonal frequency division multiplexing broadcasting system such as DVB-H where the transmitter 2 is built with sufficient power available, while the receiver 3 is integrated in a mobile device, especially a mobile phone, thus limited in available power. But, the transmission system 1 and the receiver 3 of the transmission system 1 may also be arranged for other multicarrier multiplexing methods and/or may also use other bit mappers. Hence, the receiver apparatus 3 is arranged for receiving encoded digital signals carrying digital data over a channel. In a possible application of the transmission system 1, for example, in digital video broadcasting such as the terrestrial digital video broadcasting system for handheld terminals (DVB-H) an orthogonal frequency division multiplexing with 2048 subcarriers or 8192 subcarriers is provided. Other applications are indoor communication such as IEEE 802.11 a/g/n and cellular radio systems using a multicarrier modulation technique. The transmission system 1 and the receiver apparatus 3 are applicable when some components of the transmission system 1, especially the receiver 3, are moving, for example, when the receiver 3 is installed in or carried temporarily in a car, a train or another vehicle. But, the transmission system 1 and the receiver 3 of the invention can also be used for other applications.

The transmitter 2 of the transmission system 1 provides a serial-to-parallel conversion and an inverse discrete Fourier transform (I-DFT). Therewith, a number N of complex data symbols of a parallel data stream are modulated onto a number N of orthogonal subcarriers of a multicarrier signal by means of an N-point I-DFT to form a symbol with a specific duration. This symbol is further extended with a cyclic prefix of a duration determined by a guard interval and subsequently transmitted over an air interface (antenna). Hence, encoded digital signals are transmitted as data symbol subcarriers in several frequency channels. The encoded digital signals are received by the receiver 3 via an antenna and fed via an analog-to-digital converter 4 as a parallized stream to a digital filter 5. The digital filter 5 comprises a discrete Fourier transform (DFT) which may be implemented by a fast Fourier transform (FFT). Further, the analog-to-digital converter 4 is connected with a clip restoration unit 6 which enhances the filtered digital signals filtered by the digital filter 5. The enhanced digital signals are then fed towards an interface 7 of the receiver 3. Over the interface 7 further components (not shown) of the receiver 3 can access the enhanced digital signals received by the receiver 3.

The clip restoration unit 6 comprises a part 8 to extract positions of clipped samples, a part 9 to determine spurious signals on reference subcarriers, and a part 10 to calculate a clip correction. The data stream from the analog-to-digital converter 4 is first feed to part 8 of clip restoration unit 6. Further, the output of digital filter 5 is feed to the part 9 of the clip correction unit 6. Then, outputs of parts 8 and 9 of clip correction unit 6 are input to part 10 of clip correction unit 6 so as to calculate the amount of clipping. Thereafter, the part 10 of clip correction unit 6 outputs this amount of clipping or a signal based on this amount of clipping. This output of the clip correction unit 6 is added to the output of the digital filter 5, and the resultant data is forwarded to interface 7.

Fig. 2 shows an orthogonal frequency division multiplexing symbol allocation diagram in which subcarriers are shown by filled and unfilled circles. Each row of the subcarriers is ordered with respect to a frequency coordinate 12 and each column of the subcarriers is ordered with respect to a time coordinate 13. A reference subset 14 of the subcarriers consists of subcarriers at one edge 15 and another edge 16 of the spectrum. The subcarriers of the reference subset 14 are shown by filled circles, wherein one of these subcarriers is characterized by a reference sign 17. Each row of the subcarriers belongs to one orthogonal frequency division multiplexing symbol. Hence, the first column 18 consists of the subcarriers of the first active subcarriers after the fast Fourier transform for each of the orthogonal frequency division multiplexing symbols. Further, the last column 19 consists of the subcarriers of the last active subcarriers of each of the orthogonal frequency division multiplexing symbols after the fast Fourier transform. Each row of subcarriers consists of a plurality of subcarriers, for example, in the order of 8000 active subcarriers, as shown by the three dots 27 in each of the shown rows. The subcarriers 17 of the reference subset 14 are arranged at edge 15 and edge 16, respectively. But, the subcarriers 17 of the reference subset 14 can also be scattered or arranged in another way.

The user data is carried by symbols modulated onto the subcarriers denoted by the unfilled circles. One of these is characterized by reference sign 20. Hence, the subcarriers represented by the subcarrier 20 (unfilled circles) are the subcarriers which are not subcarriers of the reference subset 14.

The subcarriers 17 of the reference subset 14 have specific values which are known to the receiver 3. The subcarrier 17 of the reference subset 14 can be empty subcarriers 17 which have a vanishing value preset. In this case, the receiver 3 knows that each of the subcarriers 17 of the reference subset 14 is preset to a zero value. Hence, without clipping and noise and with ideal channel conditions, the values determined by the receiver 3 for subcarriers 17 of the reference subset 14 are zero, respectively.

In this embodiment the subcarriers 17 of the reference subset 14 are regarded as empty subcarriers, so that their specific values are each set to zero. But, the specific values of the subcarriers 17 of the reference subset 14 may also be set to other values so that the clip restoration unit 6 estimates an amount of clipping of the filtered digital signals on the basis of a deviation of the actual values of the subcarriers 17 of the reference subset 14 from these specific values of the subcarriers 17 of the reference subset 14.

In the described embodiment in which the subcarriers 17 of the reference subset 14 are empty subcarriers the clip restoration unit 6 estimates an amount of clipping of the filtered digital signals from the actual values of the subcarriers 17 of the reference subset 14, because the specific reference values are then vanishing.

The subcarriers 20 which carry user data define a subcarrier window, wherein in each row a number M/2 of subcarriers 17 of the reference subset 14 are arranged at the edge 15 and the other edge 16, respectively. Hence, in each row a number of M empty subcarriers is provided. To illustrate the invention, in the embodiment shown the number M of empty subcarriers in each row is set to 8. It is noted that the number M of empty subcarriers must not be even, and the number of empty subcarriers at edge 15 may not equal the number of empty subcarriers at edge 16.

For IEEE 802.11a WLAN the total number N of subcarriers in each row is 64 and M = 11. For DVB-H with N = 8182 subcarriers the number M of empty subcarriers is 380. But, the number of empty subcarriers employed by a modulation scheme is not necessarily equal to the number of empty subcarriers used in the reference subset 14.

The method to receive encoded digital signals according to the embodiment of the invention attempts to reconstruct clipped signals in the analog-to-digital converter 4 of the receiver 3. Spurious components occur as non-zero subcarrier signals on the reference subset 14 due to clips and these are used by the clip restoration unit 6 to reconstruct or at least enhance the original signal component before clipping.

The receiver 3 takes N successive samples, digitizes these, and processes these in the digital filter 5, for example, with a fast Fourier transform. Thereby, the quantizer uses Q quantization levels y(0), ..., y(Q-1).

The incoming signal Y is clipped at a number J of sample positions $n_j$ with j = 0, 1, ..., J - 1. Here the sample positions $n_j$ are random variables that differ from OFDM block to OFDM block. The receiver 3 can determine these sample postions $n_j$ because at these sample positions $n_j$ the real and/or imaginary part of the samples takes on one of the two extreme values in the range of the analog-to-digital converter 4, respectively. Thus, for each of these sample positions $n_j$ the incoming signal $Y(n_j)$ equals either y(0) or y(Q-1). However, at this stage, the receiver 3 does not know how much clipping occured at these positions.

To illustrate the method according to the embodiment of the invention, the incoming signal Y can be composed into an in-range part $Y_c$ and clipped components $Y_j$ on the J sample positions $n_j$. Hence, the clip time-domain signal $Y_c$ which is feed to the digital filter 5 can be described according to formula (1)

Thereby, $\psi_j$ is all-zero, but takes the value 1 for sample position $n_j$. Hence, each $\psi_j$ can be described as formula (2)

Further, $\zeta_j$ is the amount of clipping which the clip restoration unit 6 tries to estimate at sample position $n_j$. The digital filter 5 of the receiver 3 calculates the fast Fourier transform of the clipped signal, thus the output of the digital filter 5 can be described according to formula (3).

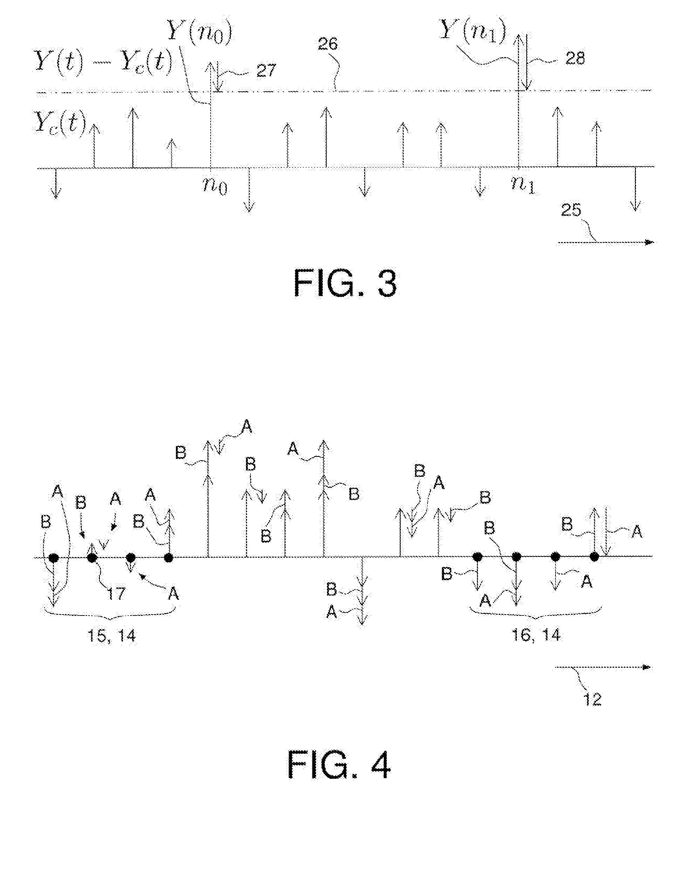

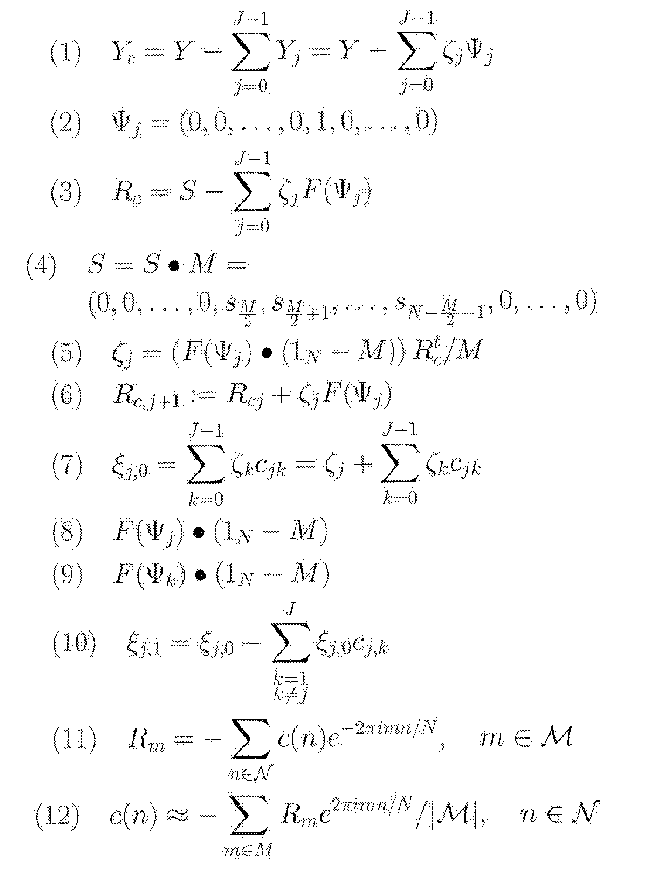

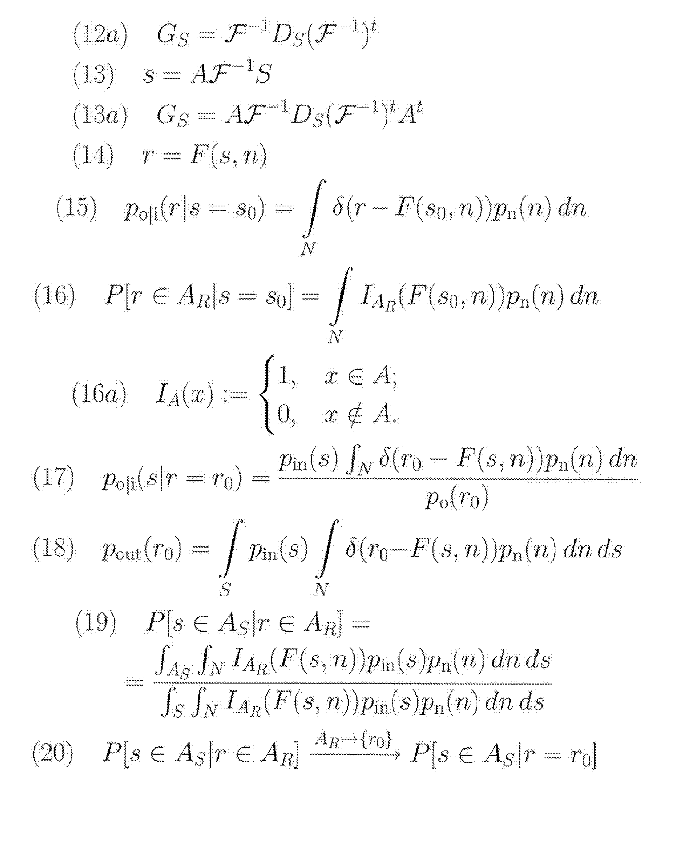

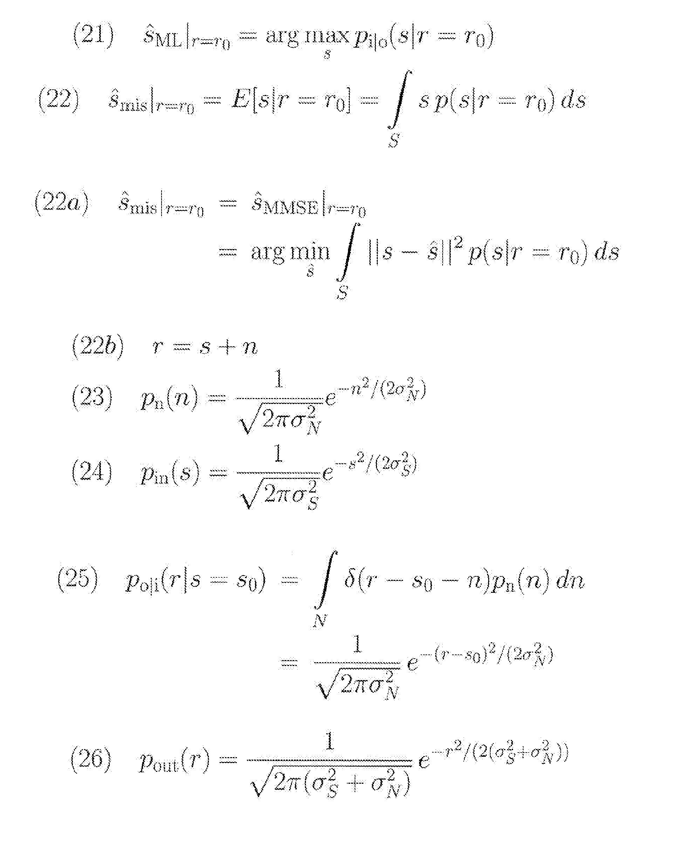

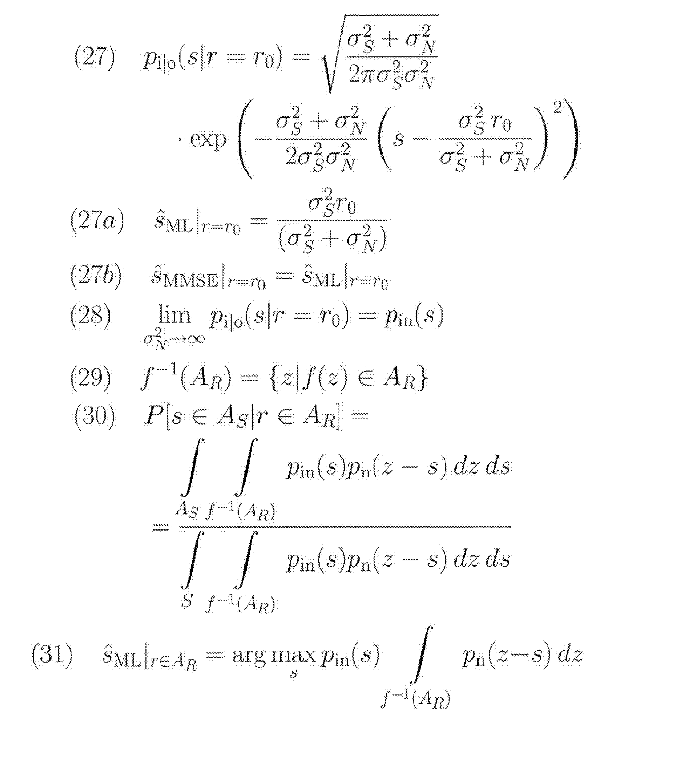

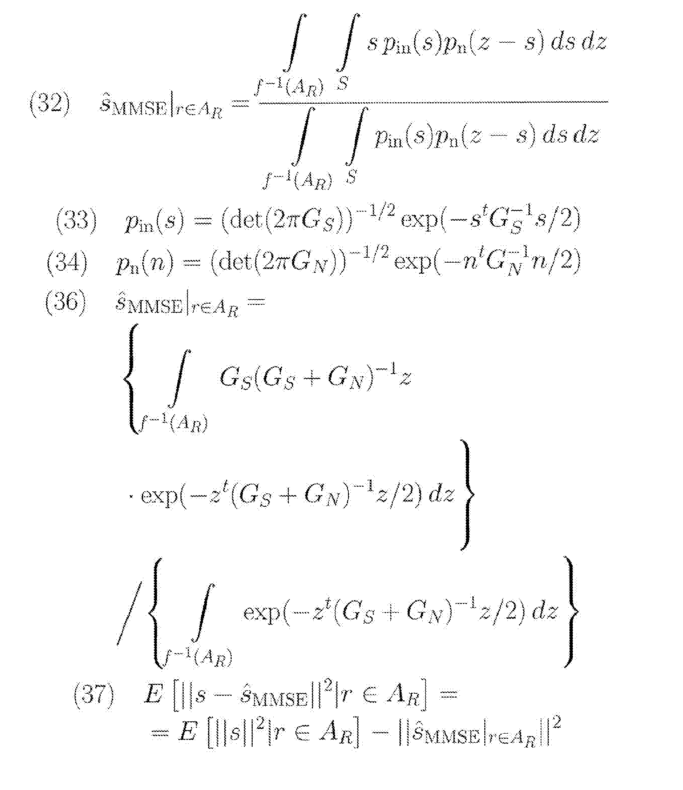

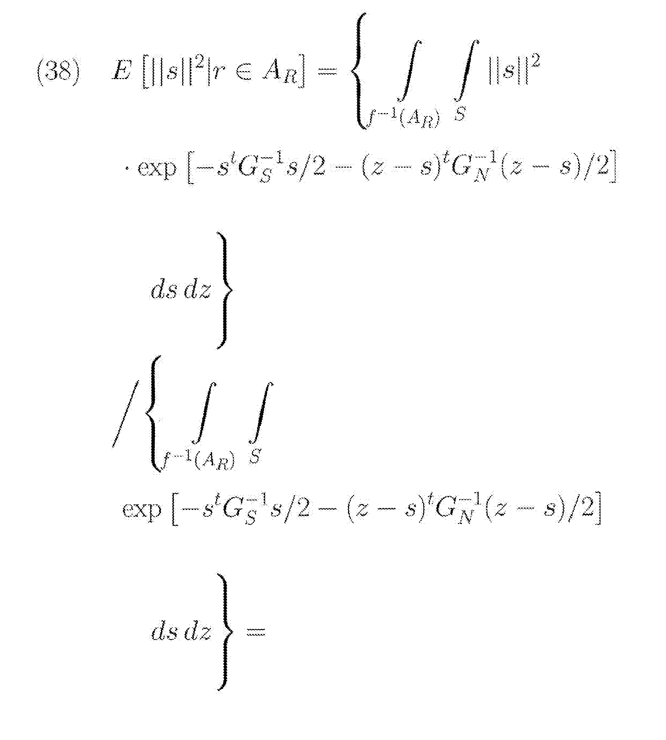

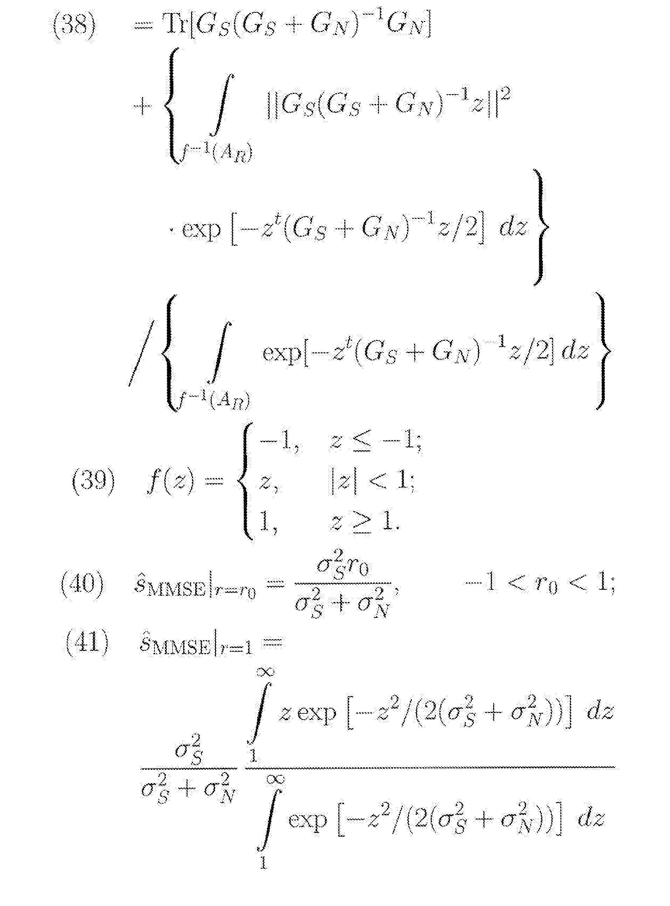

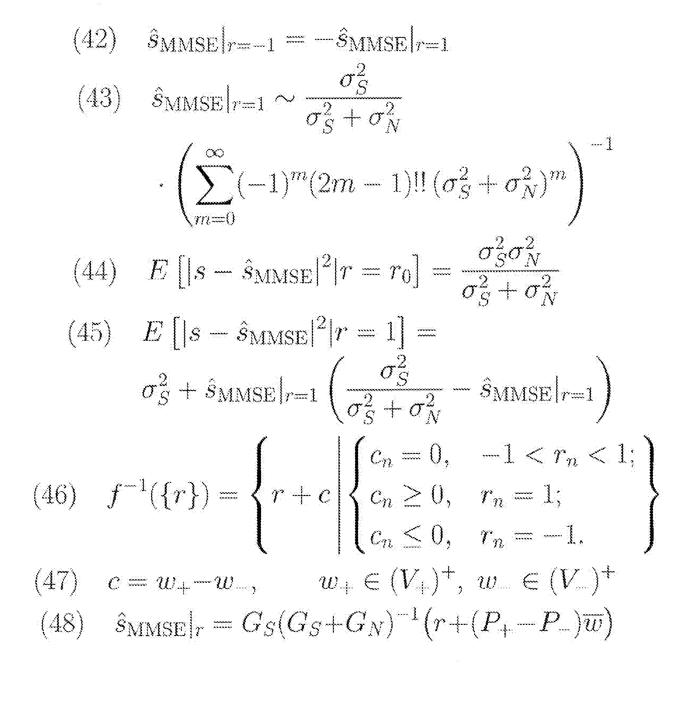

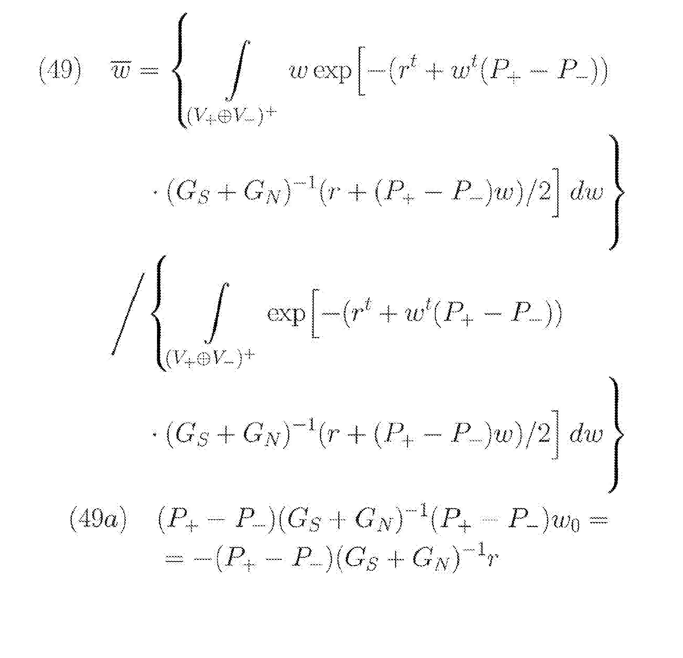

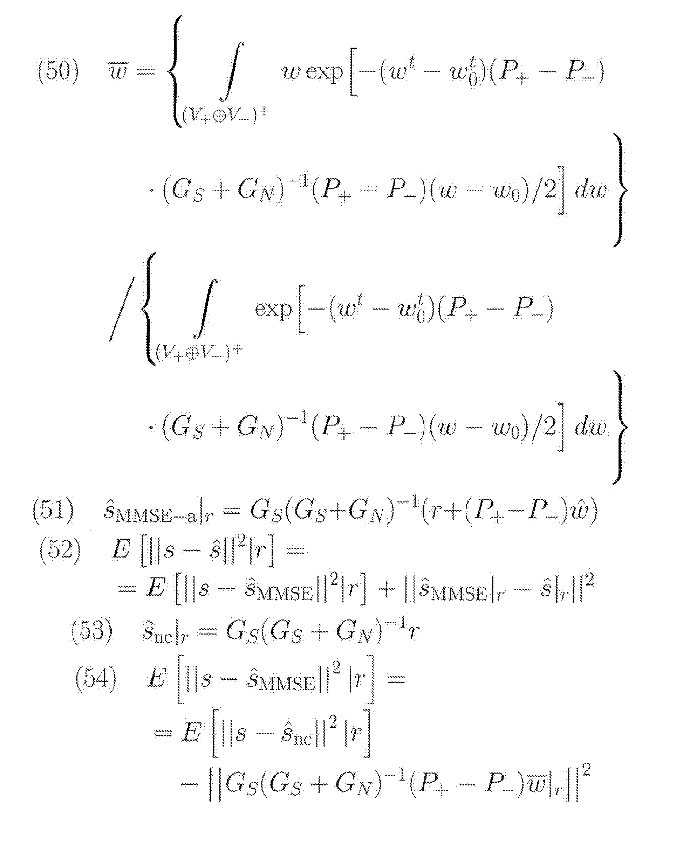

While the unclipped signal R(t) has empty subcarriers where the signal components are zero, the clipping causes signal components to appear on these empty subcarriers 17 of the reference subset 14 for the clipped signal $R_c(t)$. With reference to the orthogonal frequency division multiplexing symbol allocation diagram, as shown in Fig. 4, the signal S can be described as shown in formula (4).

Fig. 3 shows time samples Y ordered according to a time axis 25 of an OFDM signal which is clipped at two (J = 2) sample positions $n_0$, $n_1$. A boundary 26 of the digital filter 5 illustrates an extreme value for the incoming signal Y at sample positions $n_0$, $n_1$. Hence, the original signal Y ($n_0$) at sample position $n_0$ is clipped by an amount $\zeta_0$ shown by arrow 27. Further, the incoming signal Y ($n_1$) at sample position $n_1$ is clipped by an amount $\zeta_1$, as shown by arrow 28. In the case, as shown in Fig. 3, the other samples are not clipped, because they are within the boundary 26.

Fig. 4 shows the subcarriers contents of the OFDM signal and artifacts due to clipping on the empty subcarriers 17 of the reference subset 14 located at the edge 15 and edge 16 of the spectrum, respectively. The subcarriers 17 of the reference subset 14 are shown as filled circles. The effect of clipping is shown by arrows A, B, wherein at each subcarrier the arrow A illustrates clipping due to the first clipped sample $n_0$, and arrow B illustrates clipping due to the second clipped sample $n_1$. If at a position no arrow A or no arrow B is shown, then this sample is not effected by the respective clipping.

Spurious components shown by arrows A, B occur also on non-zero subcarrier signals due to clips. To reduce computational burden, the correlation between $R_c$ and $F(\psi_j)$, but only calculated over the reference subset 14 of empty subcarriers 17, can be used as a measure of the amount $\zeta_j$ of clipping. This value is used by the clip restoration unit 6 to reconstruct the original (not clipped) signal components with help of the digital filter 5.

The method employed by the receiver 3 can be described by the following steps:

    1. Determine the clipped sample positions $n_0$, $n_1$, ..., $n_{J-1}$.

    2. For each sample position $n_j$ where the samples are clipped, i.e. for all j = 0, 1, ..., J - 1, perform the following steps:

        a) Calculate $F(\Psi_j)$.

        b) Estimate the amount of clipping by correlating $\zeta_j$ according to formula (5).
        Here $1_n$ is the all-one vector of length N, so that $(1_N - M)$ selects the outer zero-subcarriers 17 of the reference subset 14.

        c) Compensate $R_c$ by taking $R_{c,j+1}$ according to formula (6).

    3. Use the resulting $R_{cj}$ to detect the data, possibly after applying channel equalization as well.

In step 2 the clip restoration unit 6 estimates the amount of clipping for a clipped sample $Y_j$ at sample position $n_j$ of the digital signal on the basis of an inner product of a component-wise product of a filtered vector $F(\Psi_j)$ which vector $F(\Psi_j)$ is selecting the clipped sample $Y_j$ and which is filtered according to a fast Fourier transformation by the digital filter 5, and a vector $(1_N - M)$ selecting the empty subcarriers 17 of the reference subset 14, and an output vector $R_c$ of the digital filter 5, which is said filtered digital signal, divided by the number M of empty subcarriers 17 selected.

In step 2 (a) the digital filter 5 retrieves the filtered vector $F(\Psi_j)$ selecting the clipped sample $Y_j$ of the digital signal Y from a look-up table.

This has the advantage, that the computational burden can be reduced. When other operations, such as filtering, windowing, frequency offset correction, and downsampling, occur between the analog-to-digital converter 4 and the digital filter 5, the function F can be replaced by a function that represents the full chain from the analog-to-digital converter 4 to the output of the digital filter 5.

In step 2 (c) the clip restoration unit 6 determines a compensated output vector as a vector-sum of the output vector $R_c$ of the digital filter 5 and the filtered vectors $F(\Psi_j)$ of the vectors $\Psi_j$ selecting the clipped samples $Y(n_j)$, wherein each of the filtered vectors $\Psi_j$ of the vectors selecting the clipped samples is weighted by the amount $\zeta_j$ of clipping estimated for the clipped samples at sample positions $n_j$, respectively.

If clipping occurs at multiple samples simultaneously ($J > 1$), the J partial vectors $(1_N - M) F(\Psi_j)$ at the output of the digital filter 5 are not orthogonal. So the estimation of each $\zeta_j$ from the composite sum of $(1_N - M) F(\Psi_j)$ vectors is an M by J matrix pseudo-inversion problem, which has a solution in ZF and MMSE sense. For known sets of sample positions $n_j$ this is a fixed matrix and its inverse matrix may be precalculated. However, storage of $2^N$ matrices may require a huge amount of memory.

To reduce the amount of memory required, a first approximation $\xi_{j,0}$ of the amount of clipping $\zeta_j$ can be obtained, as shown above, directly from the correlation between the spurious signal at the M subcarriers and the reference $F(\Psi_j)$. However, it contains crosstalk from other clipping locations:

See formula (7).

In this formula $c_{j,k}$ are crosstalk factors, which may be small. This is calculated as the inner product between the clipped-effect vectors,
as shown in formulas (8) and (9).

A second-order better estimate may be $\xi_{j,1}$ to use the first-order estimates to compensate for the crosstalk according to formula (10).

Hence, the clip restoration unit 6 of the receiver 3 can enhance the filtered digital signals with respect to the amount of clipping estimated. In short, without clipping, the received signal should be zero in the empty subcarriers 17 of the reference subset 14. If the n-th sample is clipped, the clipped signal spreads over all subcarriers, the signal in the M-th subcarrier being proportional to $\exp(-2\pi mn/N)$, where N is the number of subcarriers. Let M be the set of zero subcarriers and N be the set of positions where clipping occurred. The clip restoration unit 6 determines N, since at those positions the samples takes on the maximum or minimum value of possible (complex-valued) outputs of the digital filter 5. The received signal $R_m$, m being an element of the set M, is caused by clipping. The amplitudes $c(n)$, wherein n is an element of the set N, of the clipped signal can be described by
formula (11).

Alternatively, rather than solving these equations, the amplitudes $c(n)$ are approximated by assuming that the restricted Fourier transform is orthogonal and correlating according to formula (12).

As an example, the receiver 3 according to the embodiment described could tolerate signals that are about 1 to 3 dB stronger than would be the case if no clipping correction were applied.

The receiver 3 of the transmission system 1 may also take care of noise, especially additive white Gaussian noise (AWGN).

First, a general method to determine the minimum mean square error (MMSE) estimate for noisy non-linear systems is shown. Second, the general expression is applied to a case when the input s to the system is a real-valued Gaussian signal with correlation matrix $G_S$, the noise n is real-valued Gaussian signal with correlation matrix $G_N$ and each component of the sum $s + n$ is clipped if it is greater than 1 or less than -1. As the in-phase and quadrature parts of the signal are AD-converted separately by the analog-to-digital converter 4 it is possible to consider 2N real-valued samples, rather than N complex valued samples.

For the MMSE estimate the clip restoration unit 6 determines $\bar{w}$ ("w bar"). The evaluation of the integrals in formula (49) for $\bar{w}$ may be impractical. A good approximation to $\bar{w}$ is the point $\hat{w}$ in $(V_+ \oplus V_-)^+$ that lies closest to $w_0$, as defined in formula (49a).

When noise is present, 30 dB below the signal level, the receiver 3 may still handle about 2,5 dB higher signals before the clipping becomes too strong.

The incoming signal is the inverse Fourier transform of independent Gaussian subcarrier signals, implying that

$$(12a) \quad G_S = F^{-1} D_S (F^{-1})^t,$$

where $D_S$ is a diagonal matrix with subcarrier dependent elements and F is the discrete Fourier transform. A similar expression holds for $G_N$.

Some front end imperfections, e.g., IQ imbalance, can be modeled by the clip restoration unit 6 as a linear operator A acting on the real and imaginart parts of the complex valued signal, so that the (real valued) signal entering the ADS is

$$(13) \quad s = AF^{-1}S,$$

where S is the signal in frequency domain. Hence

$$(13a) \quad G_S = AF^{-1}D_S(F^{-1})^tA^t.$$

A similar expression holds for $G_N$. The clip restoration unit 6 of the receiver 3 can estimate A in a situation where clipping does not occur or can be ignored, and use A in the clip correction estimate.

A noisy system can be described by an input s in a multi-dimensional input space $A_S$, a number of random variables, grouped together in the noise n in a multi-dimensional "noise space" $A_N$, and a function F of the input and the noise. The result is the output r in the multi-dimensional output space $A_R$.

$$(14) \quad r = F(s,n).$$

All dimensions are arbitrary (and need not to be equal) and they are suppressed in the notation.

The clip restoration unit 6 knows the system whose output it is observing, i.e., it knows the function F.

The clip restoration unit 6 knows the probability distribution of the noise. The probability density function $p_n$ of the noise n is preset or can be estimated by the receiver 3 from the signal-to-noise ratio during the preamble of a packet.

If the input is also random, and the clip restoration unit knows its probability density function (pdf) $p_{in}$. The corresponding distribution is the a priori input distribution. Then the receiver 3 can, in principle, calculate the pdf $p_{i|O}$ of the input, given the observed output. The "reverse" pdf of the output, given the input is shown in formula (15),

or, equivalently as shown in formula (16),

where I is the indicator function (characteristic function) which can be defined according to formula (17).

Using Bayes' rule we can derive $p_{i|O}$ from $p_{O|i}$ according to formula (17), where δ is the Dirac delta function in output space and the normalizing constant $p_O$, which equals the a priori pdf that the output equals $r_0$, is calculated according to formula (18).

An equivalent formulation which avoids the use of delta functions is shown in formula (19),

and the probability P that the input signal s is within the input space $A_S$ under the condition that $r = r_0$ can be obtained in the limit when $A_R$ is reduced to the single point ro:

see formula (20).

The clip restoration unit 6 provides a maximum likelihood (ML) detection to calculate the most likely input, given the output, so the ML estimate is as shown in formula (21).

When the source space is discrete the pdf is to be interpreted as a probability. For many continuous distributions, and especially for distributions that are partly continuous and have some discrete "atoms", and for distributions with finite support, the ML estimate is not always very useful. Practical impediments: knowing $p_{in}(s)$; calculating $p(s|r = r_0)$; finding the location of the maximum of $p(s|r = r_0)$; and relevance for continuous distributions.

The mean estimate or minimum mean square error estimate (MMSE) is equal to the mean input signal, given the output which is shown in formula (22).

This estimate also minimizes the mean square input error (= mean of square of the input space norm of the difference between the input and its estimate), given the output, as shown in
formula (22a).

To illustrate the method, an (simple) example is shown. More complex situations may be derived on the basis of this example.

In this example, a one-dimensional real valued input, noise and output and a simple linear model is considered:

$$(22b) \quad r = s + n.$$

It is assumed that the noise $p_n$ is Gaussian with zero mean and variance $\sigma^2_N$ as shown in
formula (23),
and that the input $p_{in}$ is Gaussian with zero mean and variance $\sigma^2_N$ as shown in
formula (24).

The pdf $p_{o|i}$ of the output, given the input is shown in formula (25).

Hence, the output pdf $p_{out}$ is as shown in
formula (26)
and the pdf $p_{i|o}$ of the input, given the output is as shown in formula (27).

This shows that

$$(27a) \quad s^{\wedge}{}_{ML|r=r0} = \sigma^2{}_s r_0 / (\sigma^2{}_s + \sigma^2{}_N).$$

In this case the ML estimate is useful (continuous distribution with one hump and no boundary). In fact,

$$(27b) \quad s^{\wedge}{}_{MMSE|r=r0} = s^{\wedge}{}_{ML|r=r0}$$

for this example.

It is noted that the limit as shown in
formula (28)
holds. This shows that if the system becomes infinitely noisy, observation of the output doesn't reveal any more about the input then what was known a priori.

Further, a non-linear model with additive noise is described.

Now it is assumed that $F(s,n) = f(s + n)$ for some function f. This means that the signal first is distorted with additive noise, and then transformed in a deterministic (but not necessarily invertible) way. For any set $A_R \subseteq R$, we can define its pre-image $f^{-1}(A_R)$ as shown in
formula (29).

Then we can rewrite $P[s \in A_S | r \in A_R]$ as shown in
formula (30).

It follows that the ML estimate, given that $r \in A_R$, is as shown in
formula (31),
but since $f^{-1}(A_R)$ can have a boundary, the MMSE estimate may be a more useful one. It equals the MMSE estimate as shown in formula (32).

It is assumed that the components of the signal s and the noise n are real-valued Gaussians with mean zero and correlation matrices $G_S$ and $G_N$, and that the noise n and the signal s are independent. We assume that the matrices $G_S$ and $G_N$ are invertible. Then

$$(33) \quad p_{in}(s) = (\det(2\pi G_S))^{-1/2} \exp(-s^t G_S^{-1} s / 2),$$

$$(34) \quad p_n(n) = (\det(2\pi G_N))^{-1/2} \exp(-n^t G_N^{-1} n/2),$$

and it follows the equation as shown in formula (36).

The MMSE itself is shown in formula (37) and for Gaussian signals s and noise n formula (38) holds.

The previous model is extended with clipping. Let clipping be described as shown in formula (39).

And let r = f(s + n), with signal s and noise n as in the previous example. The S is real-valued and R = [-1,1]. It is noted that $f^{-1}(\{r_0\}) = \{r_0\}$ if $-1 < r_0 < 1$, $f^{-1}(\{1\}) = [1,\infty)$ and $f^{-1}(\{-1\}) = (-\infty,-1]$. Therefore, formulas (40), (41), and (42) hold.

For small $\sigma^2_S + \sigma^2_N$, we have the asymptotic expansion as shown in formula (43).

The series expansion is divergent, but it gives a good approximation for small $\sigma^2_S + \sigma^2_N$ if it is truncated after a not too big number of terms.

If $-1 < r_0 < 1$, formulas (44) and (45) hold.

Further, clipped correlated Gaussian signals are described.

Let f be the same function as in the previous example, now acting component-wise. Then

$$(46) \quad f^{-1}(\{r\}) = \{r+c \mid c_n = 0 \text{ if } -1 < r_n < 1; \ c_n \geq 0 \text{ if } r_n = 1;$$

$$c_n \leq 0 \text{ if } r_n = -1\}.$$

Let $C_+ = \{n \mid r_n = 1\}$; $C_- = \{n \mid r_n = -1\}$, $C_0 = \{n \mid -1 < r_n < 1\}$ and let $V_+$, $V_-$ and $V_0$ be the sets of vectors with support in $C_+$, $C_-$ and $C_0$, respectively. The projection operators on $V_+$, $V_-$ and $V_0$ are denoted by $P_+$, $P_-$ and $P_0$. We can write c in the description of $f^{-1}(\{r\})$ above as

$$(47) \quad c = w_+ - w_-, \text{ with } w_+ \in (V_+)^+, \ w_- \in (V_-)^+.$$

(the superscript + indicates the subspace in which all elements are non-negative) Equivalently, for each possible clipping signal c we can uniquely write it as c = $(P_+ - P_-)$w with w $\in (V_+ \oplus V_-)^+$. Then the MMSE estimate becomes

$$(48) \quad s^\wedge_{MMSE \mid r} = G_S (G_S + G_N)^{-1} [r + (P_+ - P_-) \overline{w}],$$

where w is calculated as shown in formula (49).

Define $w_0$ as the unique solution in $V_+ \oplus V_-$ of

$$(49a) \quad (P_+ - P_-)(G_S + G_N)^{-1}(P_+ - P_-)w_0 = -(P_+ - P_-)(G_S + G_N)^{-1}r,$$

then $\overline{w}$ is calculated as shown in formula (50).

If $w_0$ happens to lie inside $(V_+ \oplus V_-)^+$ and far away from the boundary (i.e., $w^t_0(P_+ - P_-)(G_S + G_N)^{-1}(P_+ - P_-)w_0 = -w^t_0(P_+ - P_-)(G_S + G_N)^{-1}r >> 0$), then the domain of integration can be extended from $(V_+ \oplus V_-)^+$ to $V_+ \oplus V_-$ with negligible error. This implies that in this case the $\overline{w}$ estimate is well approximated by $w_0$. If $w_0$ lies outside of $(V_+ \oplus V_-)^+$, it is possible to approximate $\overline{w}$ by the point $w^\wedge$ in $(V_+ \oplus V_-)^+$ that lies closest to $w_0$, where closest means that $(w^{\wedge t} - w^t_0)(P_+ - P_-)(G_S + G_N)^{-1}(P_+ - P_-)(w^\wedge - w_0)$ is minimal. If $w_0 \in (V_+ \oplus V_-)^+$, then $w^\wedge = w_0$. So the approximate MMSE estimate is

$$(51) \quad s^\wedge_{MMSE-a|r} = G_S(G_S + G_N)^{-1}(r + (P_+ - P_-)w^\wedge).$$

For any estimate s^
formula (52)
holds.

Let $s^\wedge_{nc}$ be the estimate that takes into account the noise, but ignores the clipping:

$$(53) \quad s^\wedge_{nc} = G_S(G_S + G_N)^{-1}r,$$

then
formula (54) holds.

Hence, the clipping correction is better if $G_S(G_S + G_N)^{-1}(P_+ - P_-)w^-|_r$ has large norm. In the one-dimensional example in the previous section $w_0$ is always negative, so is only slightly larger than zero for small $\sigma^2_S + \sigma^2_N$ and the clipping correction has hardly any effect. But in higher dimensions it can happen that $w_0$, and hence $w^-$, is "large and positive".

Although exemplary embodiments of the invention have been disclosed, it will be apparent to those skilled in the art that various changes and modifications can be made which will achieve some of the advantages of the invention without departing from the spirit and scope of the invention. Such modifications to the inventive concept are intended to be covered by the appended claims in which the reference signs shall not be construed as limiting the scope of the invention. Further, in the description and the appended claims the meaning of "comprising" is not to be understood as excluding other elements or steps. Further, "a" or "an" does not exclude a plurality, and a single processor or other unit may fulfill the functions of several means recited in the claims.

**Claims**

1. A receiver (3) to receive encoded digital signals, wherein said encoded digital signals are transmitted as symbols spread over multiple dimensions, a reference subset (14) of said symbols having specific values which are known to the receiver (3), said receiver (3) comprises a clip restoration unit (6), wherein said clip restoration unit (6) estimates an amount of clipping of at least a sample of a received digital signal on the basis of an actual value of at least a sample of said reference subset, and wherein said clip restoration unit (6) enhances said received digital signal with respect to said amount of clipping estimated.

2. A receiver according to claim 1, **characterized by** a digital filter (5) for filtering said encoded digital signal.

3. A receiver according to claim 2, **characterized in that** said digital filter (5) filters said encoded digital signal according to a discrete Fourier transformation.

4. A receiver according to claim 2 or 3, **characterized in that** said clip restoration unit (6) estimates said amount of clipping for a clipped sample of said digital signal on the basis of an inner product of a component-wise product of a filtered vector which vector is selecting said clipped sample and which is filtered according to a fast Fourier transformation by said digital filter (5), and a vector selecting said empty subcarriers of said reference subset (14), and an output vector of said digital filter, which is said filtered digital signal.

5. A receiver according to claim 4, **characterized in that** said digital filter (5) retrieves said filtered vector selecting said clipped sample of said digital signal from a look-up table.

6. A receiver according to claim 4, **characterized in that** said clip restoration unit (6) determines a compensated output vector as a vector-sum of said output vector of said digital filter and said filtered vectors of said vectors selecting said clipped samples, wherein each of said filtered vectors of said vectors selecting said clipped samples is weighted by said amount of clipping estimated for said clipped samples, respectively.

7. A receiver according to claim 1, **characterized in that** said clip restoration unit (6) estimates said amount of clipping of said sample of said received signal from a deviation of said actual value of said sample of said reference subset (14) from said specific value of said sample of said reference subset (14).

8. A receiver according to claim 1, **characterized in that** said specific value of said sample of said reference subset (14) is preset to zero.

9. A receiver according to claim 1, **characterized in that** symbols of said reference subset (14) are empty symbols.

10. A receiver according to claim 9, **characterized in that** said clip restoration unit estimates said amount of clipping of said received digital signal from the actual values of said symbols of said reference subset (14).

11. A receiver according to claim 1, **characterized in that** said clip restoration unit (6) treats a clipping analog-to-digital converter of said receiver (3) as a linear operator acting on said filtered digital signal.

12. A receiver according to claim 11, **characterized in that** said clip restoration unit (6) estimates said linear operator when clipping does not occur and/or when clipping can be ignored.

13. A receiver according to claim 1, **characterized in that** said clip restoration unit (6) calculates most likely encoded digital signals on the basis of said received digital signals according to a maximum likelihood calculation.

14. A receiver according to claim 13, **characterized in that** said clip restoration unit (6) performs said maximum likelihood calculation with respect to a probability density function of said encoded digital signals and a probability density function of a noise added to said encoded digital signals.

15. A receiver according to claim 14, **characterized in that** said clip restoration unit (6) selects said probability density function of said encoded digital signals and said probability density function of said noise on the basis of at least a signal-to-noise ratio.

16. A receiver according to claim 1, **characterized in that** said clip restoration unit (6) calculates mean estimate encoded digital signals on the basis of said received digital signals according to a minimum mean square error estimate calculation.

17. A mobile device to receive encoded digital signals, wherein said mobile device comprises a receiver (3) according to any one of claims 1 to 16.

18. A Telecommunication system (1) comprising at least a mobile device according to claim 17.

19. A method to receive encoded digital signals, wherein said encoded digital signals are transmitted as symbols spread over multiple dimensions, said method comprises the steps of receiving an encoded digital signal;
estimate an amount of clipping of at least a sample of said received digital signal on the basis of an actual value of at least a sample of a reference subset of symbols having specific values; and
enhancing said received digital signal with respect to said amount of clipping estimated.

FIG. 1

FIG. 2

$Y(n_0)$

$Y(t) - Y_c(t)$

26

$Y(n_1)$

27

28

$Y_c(t)$

$n_0$

$n_1$

25

# FIG. 3

A

B

B

A

B

A

B

A

B

A

A

B

A

B

A

A

B

B

A

B

A

B

B

A

B

A

17

A

B

A

15, 14

B

A

B

A

16, 14

12

# FIG. 4

$$(1) \quad Y_c = Y - \sum_{j=0}^{J-1} Y_j = Y - \sum_{j=0}^{J-1} \zeta_j \Psi_j$$

$$(2) \quad \Psi_j = (0, 0, \ldots, 0, 1, 0, \ldots, 0)$$

$$(3) \quad R_c = S - \sum_{j=0}^{J-1} \zeta_j F(\Psi_j)$$

$$(4) \quad S = S \bullet M =$$
$$(0, 0, \ldots, 0, s_{\frac{M}{2}}, s_{\frac{M}{2}+1}, \ldots, s_{N-\frac{M}{2}-1}, 0, \ldots, 0)$$

$$(5) \quad \zeta_j = \left( F(\Psi_j) \bullet (1_N - M) \right) R_c^t / M$$

$$(6) \quad R_{c,j+1} := R_{cj} + \zeta_j F(\Psi_j)$$

$$(7) \quad \xi_{j,0} = \sum_{k=0}^{J-1} \zeta_k c_{jk} = \zeta_j + \sum_{k=0}^{J-1} \zeta_k c_{jk}$$

$$(8) \quad F(\Psi_j) \bullet (1_N - M)$$

$$(9) \quad F(\Psi_k) \bullet (1_N - M)$$

$$(10) \quad \xi_{j,1} = \xi_{j,0} - \sum_{\substack{k=1 \\ k \neq j}}^{J} \xi_{j,0} c_{j,k}$$

$$(11) \quad R_m = - \sum_{n \in \mathcal{N}} c(n) e^{-2\pi i m n / N}, \quad m \in \mathcal{M}$$

$$(12) \quad c(n) \approx - \sum_{m \in M} R_m e^{2\pi i m n / N} / |\mathcal{M}|, \quad n \in \mathcal{N}$$

$$(12a) \quad G_S = \mathcal{F}^{-1} D_S (\mathcal{F}^{-1})^t$$

$$(13) \quad s = A \mathcal{F}^{-1} S$$

$$(13a) \quad G_S = A \mathcal{F}^{-1} D_S (\mathcal{F}^{-1})^t A^t$$

$$(14) \quad r = F(s, n)$$

$$(15) \quad p_{\mathrm{o|i}}(r|s = s_0) = \int_N \delta(r - F(s_0, n)) p_{\mathrm{n}}(n) \, dn$$

$$(16) \quad P[r \in A_R | s = s_0] = \int_N I_{A_R}(F(s_0, n)) p_{\mathrm{n}}(n) \, dn$$

$$(16a) \quad I_A(x) := \begin{cases} 1, & x \in A; \\ 0, & x \notin A. \end{cases}$$

$$(17) \quad p_{\mathrm{o|i}}(s|r = r_0) = \frac{p_{\mathrm{in}}(s) \int_N \delta(r_0 - F(s, n)) p_{\mathrm{n}}(n) \, dn}{p_{\mathrm{o}}(r_0)}$$

$$(18) \quad p_{\mathrm{out}}(r_0) = \int_S p_{\mathrm{in}}(s) \int_N \delta(r_0 - F(s, n)) p_{\mathrm{n}}(n) \, dn \, ds$$

$$(19) \quad P[s \in A_S | r \in A_R] =$$
$$= \frac{\int_{A_S} \int_N I_{A_R}(F(s, n)) p_{\mathrm{in}}(s) p_{\mathrm{n}}(n) \, dn \, ds}{\int_S \int_N I_{A_R}(F(s, n)) p_{\mathrm{in}}(s) p_{\mathrm{n}}(n) \, dn \, ds}$$

$$(20) \quad P[s \in A_S | r \in A_R] \xrightarrow{A_R \to \{r_0\}} P[s \in A_S | r = r_0]$$

$$(21) \quad \hat{s}_{\text{ML}}\big|_{r=r_0} = \arg\max_s p_{\text{i}|\text{o}}(s|r=r_0)$$

$$(22) \quad \hat{s}_{\text{mis}}\big|_{r=r_0} = E[s|r=r_0] = \int_S s\, p(s|r=r_0)\, ds$$

$$(22a) \quad \hat{s}_{\text{mis}}\big|_{r=r_0} = \hat{s}_{\text{MMSE}}\big|_{r=r_0}$$

$$= \arg\min_{\hat{s}} \int_S \|s - \hat{s}\|^2 p(s|r=r_0)\, ds$$

$$(22b) \quad r = s + n$$

$$(23) \quad p_{\text{n}}(n) = \frac{1}{\sqrt{2\pi\sigma_N^2}} e^{-n^2/(2\sigma_N^2)}$$

$$(24) \quad p_{\text{in}}(s) = \frac{1}{\sqrt{2\pi\sigma_S^2}} e^{-s^2/(2\sigma_S^2)}$$

$$(25) \quad p_{\text{o}|\text{i}}(r|s=s_0) = \int_N \delta(r - s_0 - n)p_{\text{n}}(n)\, dn$$

$$= \frac{1}{\sqrt{2\pi\sigma_N^2}} e^{-(r-s_0)^2/(2\sigma_N^2)}$$

$$(26) \quad p_{\text{out}}(r) = \frac{1}{\sqrt{2\pi(\sigma_S^2 + \sigma_N^2)}} e^{-r^2/(2(\sigma_S^2 + \sigma_N^2))}$$

$$(27) \quad p_{\mathrm{i}|\mathrm{o}}(s|r = r_0) = \sqrt{\frac{\sigma_S^2 + \sigma_N^2}{2\pi\sigma_S^2\sigma_N^2}}$$

$$\cdot \exp\left(-\frac{\sigma_S^2 + \sigma_N^2}{2\sigma_S^2\sigma_N^2}\left(s - \frac{\sigma_S^2 r_0}{\sigma_S^2 + \sigma_N^2}\right)^2\right)$$

$$(27a) \quad \hat{s}_{\mathrm{ML}}|_{r=r_0} = \frac{\sigma_S^2 r_0}{(\sigma_S^2 + \sigma_N^2)}$$

$$(27b) \quad \hat{s}_{\mathrm{MMSE}}|_{r=r_0} = \hat{s}_{\mathrm{ML}}|_{r=r_0}$$

$$(28) \quad \lim_{\sigma_N^2 \to \infty} p_{\mathrm{i}|\mathrm{o}}(s|r = r_0) = p_{\mathrm{in}}(s)$$

$$(29) \quad f^{-1}(A_R) = \{z | f(z) \in A_R\}$$

$$(30) \quad P[s \in A_S | r \in A_R] =$$

$$= \frac{\displaystyle\int_{A_S}\int_{f^{-1}(A_R)} p_{\mathrm{in}}(s)p_{\mathrm{n}}(z-s)\,dz\,ds}{\displaystyle\int_{S}\int_{f^{-1}(A_R)} p_{\mathrm{in}}(s)p_{\mathrm{n}}(z-s)\,dz\,ds}$$

$$(31) \quad \hat{s}_{\mathrm{ML}}|_{r\in A_R} = \arg\max_{s} p_{\mathrm{in}}(s) \int_{f^{-1}(A_R)} p_{\mathrm{n}}(z-s)\,dz$$

$$(32) \quad \hat{s}_{\mathrm{MMSE}}|_{r \in A_R} = \frac{\displaystyle\int_{f^{-1}(A_R)} \int_S s\, p_{\mathrm{in}}(s) p_{\mathrm{n}}(z-s)\, ds\, dz}{\displaystyle\int_{f^{-1}(A_R)} \int_S p_{\mathrm{in}}(s) p_{\mathrm{n}}(z-s)\, ds\, dz}$$

$$(33) \quad p_{\mathrm{in}}(s) = (\det(2\pi G_S))^{-1/2} \exp(-s^t G_S^{-1} s/2)$$

$$(34) \quad p_{\mathrm{n}}(n) = (\det(2\pi G_N))^{-1/2} \exp(-n^t G_N^{-1} n/2)$$

$$(36) \quad \hat{s}_{\mathrm{MMSE}}|_{r \in A_R} =$$

$$\left\{ \int_{f^{-1}(A_R)} G_S(G_S + G_N)^{-1} z \right.$$

$$\left. \cdot \exp(-z^t(G_S + G_N)^{-1} z/2)\, dz \right\}$$

$$\Big/ \left\{ \int_{f^{-1}(A_R)} \exp(-z^t(G_S + G_N)^{-1} z/2)\, dz \right\}$$

$$(37) \quad E\left[ \|s - \hat{s}_{\mathrm{MMSE}}\|^2 \,\big|\, r \in A_R \right] =$$
$$= E\left[ \|s\|^2 \,\big|\, r \in A_R \right] - \|\hat{s}_{\mathrm{MMSE}}|_{r \in A_R}\|^2$$

$$(38) \quad E\left[\|s\|^2 | r \in A_R\right] = \left\{ \int_{f^{-1}(A_R)} \int_S \|s\|^2 \right.$$

$$\cdot \exp\left[-s^t G_S^{-1} s/2 - (z-s)^t G_N^{-1}(z-s)/2\right]$$

$$\left. ds\, dz \right\}$$

$$\bigg/ \left\{ \int_{f^{-1}(A_R)} \int_S \right.$$

$$\exp\left[-s^t G_S^{-1} s/2 - (z-s)^t G_N^{-1}(z-s)/2\right]$$

$$\left. ds\, dz \right\} =$$

$$(38) \quad = \mathrm{Tr}[G_S(G_S + G_N)^{-1}G_N]$$

$$+ \left\{ \int_{f^{-1}(A_R)} \|G_S(G_S + G_N)^{-1}z\|^2 \right.$$

$$\left. \cdot \exp\left[-z^t(G_S + G_N)^{-1}z/2\right] dz \right\}$$

$$\Big/ \left\{ \int_{f^{-1}(A_R)} \exp\left[-z^t(G_S + G_N)^{-1}z/2\right] dz \right\}$$

$$(39) \quad f(z) \equiv \begin{cases} -1, & z \leq -1; \\ z, & |z| < 1; \\ 1, & z \geq 1. \end{cases}$$

$$(40) \quad \hat{s}_{\mathrm{MMSE}}\big|_{r=r_0} = \frac{\sigma_S^2 r_0}{\sigma_S^2 + \sigma_N^2}, \qquad -1 < r_0 < 1;$$

$$(41) \quad \hat{s}_{\mathrm{MMSE}}\big|_{r=1} =$$

$$\frac{\sigma_S^2}{\sigma_S^2 + \sigma_N^2} \frac{\displaystyle\int_1^{\infty} z \exp\left[-z^2/(2(\sigma_S^2 + \sigma_N^2))\right] dz}{\displaystyle\int_1^{\infty} \exp\left[-z^2/(2(\sigma_S^2 + \sigma_N^2))\right] dz}$$

$$(42) \quad \hat{s}_{\mathrm{MMSE}}\big|_{r=-1} = -\hat{s}_{\mathrm{MMSE}}\big|_{r=1}$$

$$(43) \quad \hat{s}_{\mathrm{MMSE}}\big|_{r=1} \sim \frac{\sigma_S^2}{\sigma_S^2 + \sigma_N^2}$$

$$\cdot \left( \sum_{m=0}^{\infty} (-1)^m (2m-1)!! \, (\sigma_S^2 + \sigma_N^2)^m \right)^{-1}$$

$$(44) \quad E\left[ |s - \hat{s}_{\mathrm{MMSE}}|^2 \big| r = r_0 \right] = \frac{\sigma_S^2 \sigma_N^2}{\sigma_S^2 + \sigma_N^2}$$

$$(45) \quad E\left[ |s - \hat{s}_{\mathrm{MMSE}}|^2 \big| r = 1 \right] =$$

$$\sigma_S^2 + \hat{s}_{\mathrm{MMSE}}\big|_{r=1} \left( \frac{\sigma_S^2}{\sigma_S^2 + \sigma_N^2} - \hat{s}_{\mathrm{MMSE}}\big|_{r=1} \right)$$

$$(46) \quad f^{-1}(\{r\}) = \left\{ r + c \, \middle| \, \begin{cases} c_n = 0, & -1 < r_n < 1; \\ c_n \geq 0, & r_n = 1; \\ c_n \leq 0, & r_n = -1. \end{cases} \right\}$$

$$(47) \quad c = w_+ - w_-, \qquad w_+ \in (V_+)^+, \, w_- \in (V_-)^+$$

$$(48) \quad \hat{s}_{\mathrm{MMSE}}\big|_r = G_S (G_S + G_N)^{-1} \left( r + (P_+ - P_-)\overline{w} \right)$$

$$(49) \quad \overline{w} = \left\{ \int_{(V_+ \oplus V_-)^+} w \exp\left[ -(r^t + w^t(P_+ - P_-)) \right. \right.$$

$$\left. \cdot (G_S + G_N)^{-1}(r + (P_+ - P_-)w)/2 \right] dw \right\}$$

$$\Big/ \left\{ \int_{(V_+ \oplus V_-)^+} \exp\left[ -(r^t + w^t(P_+ - P_-)) \right. \right.$$

$$\left. \cdot (G_S + G_N)^{-1}(r + (P_+ - P_-)w)/2 \right] dw \right\}$$

$$(49a) \quad (P_+ - P_-)(G_S + G_N)^{-1}(P_+ - P_-)w_0 =$$
$$= -(P_+ - P_-)(G_S + G_N)^{-1}r$$

$$(50) \quad \overline{w} = \left\{ \int\limits_{(V_+ \oplus V_-)^+} w \exp\left[-(w^t - w_0^t)(P_+ - P_-)\right.\right.$$

$$\left.\cdot (G_S + G_N)^{-1}(P_+ - P_-)(w - w_0)/2\right] dw \right\}$$

$$\left/ \left\{ \int\limits_{(V_+ \oplus V_-)^+} \exp\left[-(w^t - w_0^t)(P_+ - P_-)\right.\right.\right.$$

$$\left.\cdot (G_S + G_N)^{-1}(P_+ - P_-)(w - w_0)/2\right] dw \right\}$$

$$(51) \quad \hat{s}_{\text{MMSE-a}}|_r = G_S(G_S + G_N)^{-1}(r + (P_+ - P_-)\hat{w})$$

$$(52) \quad E\left[\||s - \hat{s}\||^2 |r\right] =$$

$$= E\left[\||s - \hat{s}_{\text{MMSE}}\||^2 |r\right] + \||\hat{s}_{\text{MMSE}}|_r - \hat{s}|_r\||^2$$

$$(53) \quad \hat{s}_{\text{nc}}|_r = G_S(G_S + G_N)^{-1}r$$

$$(54) \quad E\left[\||s - \hat{s}_{\text{MMSE}}\||^2 |r\right] =$$

$$= E\left[\||s - \hat{s}_{\text{nc}}\||^2 |r\right]$$

$$- \||G_S(G_S + G_N)^{-1}(P_+ - P_-)\overline{w}|_r\||^2$$

**European Patent Office**

**EUROPEAN SEARCH REPORT**

Application Number

EP 06 30 1184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GATHERER A ET AL: "Controlling clipping probability in DMT transmission" SIGNALS, SYSTEMS & COMPUTERS, 1997. CONFERENCE RECORD OF THE THIRTY-FIRST ASILOMAR CONFERENCE ON PACIFIC GROVE, CA, USA 2-5 NOV. 1997, LOS ALAMITOS, CA, USA,IEEE COMPUT. SOC, US, vol. 1, 2 November 1997 (1997-11-02), pages 578-584, XP010280889 ISBN: 0-8186-8316-3 * 4. Clipping Estimation and Correction Implemented at the Receiver * ----- | 1-3, 7-12, 17-19 | INV. H04L27/26 |
| X | EP 1 601 150 A (NTT DOCOMO INC [JP]) 30 November 2005 (2005-11-30) <br><br> * paragraph [0001] * <br> * paragraph [0003] * <br> * paragraph [0053] - paragraph [0061] * <br> * paragraph [0063] - paragraph [0064] * <br> * paragraph [0066] - paragraph [0067] * <br> * paragraph [0073] * <br> ----- | 1-3, 8-10, 17-19 | |
| X | TELLADO J ET AL: "Maximum likelihood detection of nonlinearly distorted multicarrier symbols by iterative decoding" GLOBAL COMMUNICATIONS CONFERENCE- GLOBECOMM'99, vol. 5, 5 December 1999 (1999-12-05), pages 2493-2498, XP010373401 * Abstract * * I. Introduction * * III. Description of Memoryless Nonlinearity * * V. Maximum Likelihood (ML) Detection * ----- -/-- | 1-3, 7-15, 17-19 | |

TECHNICAL FIELDS SEARCHED (IPC)

H04L

The present search report has been drawn up for all claims

| Place of search | Date of completion of the search | Examiner |
|---|---|---|
| Munich | 26 April 2007 | Palacián Lisa, Marta |

EPO FORM 1503 03.82 (P04C01)

**European Patent Office**

**EUROPEAN SEARCH REPORT**

Application Number

EP 06 30 1184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/038052 A (NOKIA CORP [FI]; LINDH LARS [FI]) 13 April 2006 (2006-04-13) <br> * abstract * <br> * page 3, line 11 - page 5, line 4 * <br> * page 6, line 13 - line 32 * <br> * page 7, line 29 - page 8, line 12 * <br> * page 23, line 6 - page 28, line 6 * <br> ----- | 1-19 | |
| A | DUKHYUN KIM ET AL: "Clipping Noise Mitigation for OFDM by Decision-Aided Reconstruction" <br> IEEE COMMUNICATIONS LETTERS, IEEE SERVICE CENTER, PISCATAWAY, NJ, US, <br> vol. 3, no. 1, January 1999 (1999-01), <br> XP011010648 <br> ISSN: 1089-7798 <br> * Abstract * <br> * II. System and Channel Mode * <br> * III. Decision-Aided Reconstruction (DAR) * <br><br> ----- | 1-19 | |

TECHNICAL FIELDS SEARCHED (IPC)

The present search report has been drawn up for all claims

| Place of search | Date of completion of the search | Examiner |
|---|---|---|
| Munich | 26 April 2007 | Palacián Lisa, Marta |

EPO FORM 1503 03.82 (P04C01)

## ANNEX TO THE EUROPEAN SEARCH REPORT
## ON EUROPEAN PATENT APPLICATION NO.

EP 06 30 1184

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2007

| Patent document cited in search report | | Publication date | Patent family member(s) | | Publication date |
|---|---|---|---|---|---|
| EP 1601150 | A | 30-11-2005 | CN | 1703036 A | 30-11-2005 |
| | | | JP | 2005341056 A | 08-12-2005 |
| | | | US | 2005265226 A1 | 01-12-2005 |
| WO 2006038052 | A | 13-04-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• WO 02067525 A2